# EUROPEAN PATENT APPLICATION

(11) **EP 3 101 541 A1**
(43) Date of publication of application: **07.12.2016**
(21) Application number: 15170799.9
(22) Date of filing: 05.06.2015
(51) Int. Cl.: G06F 9/50

(54) **A SYSTEM AND METHOD FOR FACILITATING MIGRATION OF SERVER INFRASTRUCTURE SERVICES**

(71) Applicant: Deutsche Telekom AG, 53113 Bonn (DE)
(72) Inventor: HOLMES, Ta'id, 63477 Maintal (DE)
(74) Representative: Vossius & Partner Patentanwälte Rechtsanwälte mbB

(57) **Abstract**

The present invention relates to a system for facilitating migration of server infrastructure services, comprising an infrastructure entity being arranged to provide a client entity with hardware resource functionality by means of a first set of control commands, wherein each control command of the first set is implemented by at least one control command of a second set of control commands for accessing the hardware resources, and a migration entity being arranged to create an updated further infrastructure entity by replication of the control commands of the first set of control commands and replacement of at least a part of the respective control commands of the second set of control commands with stored control commands.

## Description

The present invention is directed towards a client/server infrastructure which allows the migration of provided functionality from one hardware infrastructure to another hardware infrastructure. Once hardware requirements change or an updated firmware version is available, running systems may need to be migrated to another hardware infrastructure. The suggested system and method allow an efficient migration to a scalable hardware infrastructure, for instance over a network. It is one aspect of the present invention to create models of hardware resources which are considered for the migration of the respective hardware environment.

Typically hardware platforms need to be highly scalable due to ever changing requirements regarding the provision of storage, size and computing power. Once control commands are installed and provided over a first computer system, such a computer system needs to be upgraded and enhanced. This can be accomplished to a certain extent, wherein a complete migration of a control system from one hardware infrastructure to a further hardware infrastructure might be necessary. Such migration procedures may be prone to errors and typically result in high efforts. In addition, such migration procedures may cause a specific downtime, which means that a provided service may not be available for a certain period of time.

Known methods provide a semi-automatic approach towards migration of running systems, which still need human interaction. Furthermore, specific modeling techniques are known, which model constraints towards a migration of software systems.

The OASIS Topology and Orchestration Specification for Cloud Applications (TOSCA) is a standard for describing cloud service topologies. It incorporates Web service technologies such as the Business Process Modeling Notation BPMN and Business Process Execution Language BPEL. Aiming at portability of cloud applications current advancements are driven by design models. There is currently no work that permits to analyze a system (i.e., a tenant) and reverse-engineer a TOSCA specification. In contrast the suggested approach performs runtime reflection for reverse-engineering a runtime model and for aligning the provisioning of cloud infrastructure services under consideration of hardware requirements.

CloudFormation permits to describe setups in a file based manner. It can be used for defining templates that can be instantiated in a management console. While not at a modeling level this technology can be used to instantiate similar setups in different clouds or tenants. Also, it may be possible to reverse engineer a CloudFormation description, yet, the comparison of two of such descriptions and their resolution for aligning infrastructure services under consideration of hardware requirements is not addressed in known methods and thus forms a distinction of the suggested approach.

The idea of comparing a target model against reality as applied in this work is the bases of many studies. Prior art approaches evaluate runtime systems against valid states restricted by requirements. Prior art approaches furthermore establish and monitor service level agreements (SLAs) of service-bases systems.

There are a couple of related metamodels and DSLs targeting cloud provisioning: Prior art approaches present an UML-based approach for the modeling of cloud applications. Silva et al. propose a DSL for supporting cloud portability. It is believed that all of these approaches can be extended with the other parts of the approach. That is, a particular metamodel is not pivotal to the approach. It must comprise IaaS concepts though. In case the metamodel is to be substituted, the reflection service and the execution engine will have to be adapted.

Modeling constitutes a suitable practice in domains where underlying concepts can be abstracted and where complexity needs to be mastered. In computer science, model-driven engineering (MDE) enables stakeholders to directly participate in the engineering process by relating to constructive models that abstract from technology.

In the context of cloud computing, an architect models tailored service topologies for cloud-based solutions. For instance, a Web application in form of a software as a service (SaaS) may comprise cloud infrastructure services such as server instances for a load balancer, web servers, application servers, and a database system. All of which may be provided by a platform as a service (PaaS). Using modeling techniques, the comprised services such as the infrastructure services are specified in terms of computing power, memory, storage, network, and security rules.

The provisioning of cloud services in terms of infrastructure is realized by one or multiple infrastructure as a service (IaaS) providers. Following the idea of service-oriented computing (SOC), cloud computing abstracts from underlying hardware and permits automation of the overall provisioning. By applying a model-driven approach, limited to forward-engineering, the latter automation can be leveraged. That is, from a model - reflecting the cloud infrastructure - IaaS consumers can be generated and executed for IaaS provisioning. Not only does modeling permit to directly incorporate architects, also the resulting saving of time is significant. Yet, being a forward engineering approach, it is limited to initial setups. That is, a change to a service topology that shall be conducted posterior to an initial provisioning generally would require a complete regeneration. Even in early prototyping projects relying on cloud infrastructure, this is unfeasible in many situations.

For example, a cloud architect could decide to add another server instance such as a virtual private network (VPN) gateway to the service topology of the solution. This would not affect already provisioned cloud services, but require the instantiation of a new virtual machine and the deployment of particular security rules associated with the newly to be provisioned VPN service. Given the forward engineering approach it is only intended to provision an entire service topology. In this case, however, it would be more desirable to only consider the changes to the original model and perform required actions. In other cases it might be more constructive to compare a model describing the target configuration against reality.

For overcoming the limitations of model-driven provisioning being restricted to forward-engineering this approach rather proposes a model-based round-trip engineering approach. It incorporates runtime reflection for applying differential changes to an existing service topology. Comparing two models, such as a target de jure model with a current de facto runtime model, the work can be applied for enforcing conformance. Moreover and as a particular contribution of this work, it can facilitate alignment and migration of infrastructure services between cloud environments.

It is therefore an object of the present invention to provide a system for facilitating migration of server infrastructure services from a first hardware environment to a second hardware environment, which can be performed efficiently and is less prone to errors compared to known systems. It is furthermore an object to implement such an infrastructure migration system under consideration of legacy systems without any further adaption thereof. It is furthermore an object of the present invention to provide a respective method as well as a computer-readable medium containing program instructions for causing a computer to perform this method.

The object is solved by a system according to the subject-matter of the independent claim 1.

Accordingly, a system for facilitating migration of server infrastructure services is provided. The system comprises an infrastructure entity being arranged to provide a client entity with hardware resource functionality by means of a first set of control commands, wherein each control command of the first set is implemented by at least one control command of a second set of control commands for accessing the hardware resources. The system furthermore comprises a migration entity being arranged to create an updated further infrastructure entity by replication of the control commands of the first set of control commands and replacement of at least a part of the respective control commands of the second set of control commands with stored control commands.

Hence, a system is provided which is able to transfer hardware control commands, for instance, providing a specific service, from one computing system to another computing system. Such a server infrastructure may comprise hardware resource functionality, which is provided by respective control commands. The server infrastructure may comprise storage means as well as computing means, which are provided for usage by a client entity. Accordingly, a server infrastructure service may be a specific set of control commands which provides access to information items or allow a user to operate a data base system.

The client entity can be a remote computer or a remote computer system which accesses the server infrastructure by means of a computer network. Such a network may be wireless or wired. Hence, it is possible to provide such services over a telecommunications network. In such a scenario, the client entity may as well be formed by a cell phone. The server infrastructure is typically performed by a set of hardware resources such as a computer or several computers, which for instance form a server cluster.

The infrastructure entity may be implemented by hardware resources or at least by virtualized hardware resources which form a representation of real hardware resources. Hence, the infrastructure entity can be a physical entity being part of the system for facilitating migration of server infrastructure services or can be implemented by respective control commands which simulate the required hardware resources. The person skilled in the art furthermore recognizes that such an infrastructure entity can be provided by a mixture thereof. This means that such an infrastructure comprises physical entities as well as firmware commands. The same holds true for the migration entity which can be provided by means of software components, physical hardware entities or a combination thereof. The infrastructure entity may comprise physical storage means as well as virtualized abstraction of such a storage means. Storage can then be provided by a combination of at least one server running hard discs along with further partitions of further hard discs. As a physical hardware device providing storage space may be partitioned into several virtual hardware resources any combination of physical and virtualized hardware resources can be applied for providing the infrastructure entity, the migration entity as well as the hardware resource functionality.

The control commands operate on information items and provide functionality such as read and write operations on the respective information items and may as well provide functionality in the sense of a dynamic runtime behavior. A first set of control commands may for instance form an interface providing the client entity with access to the hardware resource functionality. The second set of control commands can be formed by a firmware, which directly accesses specific hardware components. It is therefore possible to provide the client entity with functionality according to a first set of control commands which are implemented by a second set of control commands. The client entity can therefore access hardware resources by offered control commands of the first set, wherein the control commands of the first set are bound to specific implementations of the second set of control commands. This allows that a user is provided with unchanged control commands which may be implemented according to several implementation options. For example, the user may access the infrastructure entity by means of control commands of the first set of control commands, wherein the migration entity is arranged to dynamically implement the first set of control commands by selected control commands of the second set of control commands. This allows that a migration of server infrastructure services is hidden to the user and the migration entity can either access the infrastructure entity or the updated further infrastructure entity.

The system can therefore at least in part perform a replication of provided services of a first infrastructure and afterwards provide the services over a second infrastructure, namely the updated further infrastructure entity which represents a migration of respective server infrastructure services. It is of advantage to provide the user with control commands of the first set of control commands on which the user can rely and furthermore implement these control commands of the first set by respective control commands of the second set which accesses the underlying hardware infrastructure. Hence, it is possible to completely hide the migration of the services from one hardware platform to another hardware platform.

It is furthermore of advantage that not all control commands are replicated but only those control commands are replicated which can be updated. The migration entity therefore checks whether a newer version of the control commands is stored and in case such control commands are identified, these are operated on the updated further infrastructure entity, wherein the control commands, which do not require an update, are transferred to the new infrastructure entity without amendments. This provides the advantage that only those control commands which are to be updated are replaced and further control commands, which can be operated without further changes, are replicated and provided over the updated further infrastructure entity. Hence, not a complete migration of older service versions is required but an updated model of requirements is implemented towards the updated further infrastructure entity.

The stored control commands may for instance be stored by a configuration file or a database. Hence, it is possible to identify those control commands which can be updated and implicitly identify those control commands which are replicated for their further usage. For identification of those control commands to be updated further means such as a version control system can be implemented which indicates the stored control commands which serve as update control commands for the control commands of the second set. In case a new firmware version of hardware resources is available, the respective control commands for accessing the hardware resources can be stored and can then be used upon a migration of server infrastructure services replacing the former version of control commands. Hence, along with a replication of provided services from one hardware platform to another, an update is performed.

It is of advantage that not all control commands are replaced or all control commands are replicated, but a mixture of replication and replacement is performed, wherever either a replacement or a replication is necessary. This guarantees to the user that only those control commands which are to be updated are replaced and that already implemented control commands being up to date are operated without amendments. The stored control commands may for instance be provided by means of a model, such as a difference model also referred to as DIFF-model. Such a DIFF-model may be computed such that a running system provides a first model and the application of such a DIFF-model results in a target model, which represents the updated further infrastructure entity. Hence, the differences of the infrastructure entity compared to the updated further infrastructure entity can be modeled by the migration entity which identifies control commands which are to be updated. Once such a DIFF-model is applied to the infrastructure entity a further updated infrastructure entity results. This may also be referred to as a model-based approach.

According to a further aspect of the present invention, the infrastructure entity and the further infrastructure entity are formed by virtualized hardware resources. This provides the advantage that the suggested entities can be supplied by hardware resources, virtualized hardware resources as software components or a combination thereof.

According to a further aspect of the present invention, the migration entity is arranged to iteratively identify control commands of the first set and replicate the identified control commands as part of the updated further infrastructure entity. This provides the advantage that the migration entity can monitor the infrastructure entity and upon establishment of a further service by the first infrastructure entity, such a service can be transferred to the second, namely the updated further infrastructure entity.

According to a further aspect of the present invention, the migration entity is arranged to switch the provision of the hardware resource functionality from the infrastructure entity to the updated further infrastructure entity. This provides the advantage that a provided service can be switched via a broker or a mediation component to decide whether a hardware functionality is either provided by the infrastructure entity or the updated further infrastructure entity. Hence, a first service can be provided by the infrastructure entity and once such a service is updated, it can be provided by means of a further updated infrastructure entity.

According to a further aspect of the present invention, the migration entity is arranged to replace control commands of the second set in case an updated control command is stored. This provides the advantage that control commands of the second set are only updated in case there is an indication of an updated version. Hence, not all of the control commands need to be updated, but rather a system check is performed whether updates are available or not. Only those commands, which are available in a newer version, are replaced. Hence, efficiency of the migration is fostered.

According to a further aspect of the present invention, at least one of a group of hardware resource functionalities is provided, the group comprising a processor usage, a memory usage, a storage usage and a network usage. This provides the advantage that every available hardware resource functionality can be provided by the respective server infrastructure service. Such a service may for instance provide access to an information item being stored on a respective storage device. Hence, a virtualized environment can be provided by the underlying hardware system.

According to a further aspect of the present invention, the stored control commands provide updates of the control commands of the second set of control commands. This provides the advantage that the stored control commands provide the same functionality of the control commands of the second set of control commands, but are implemented in an alternative way. Hence, the signature of the control commands of the first set is not changed, wherein the respective functionality being provided by the first set of control commands is implemented in an alternative way by means of the control commands of the second set.

According to a further aspect of the present invention, the provision of the hardware resource functionality is performed over a network. This provides the advantage that the hardware resource functionality can be provided by a distributed system and hence, the respective hardware architecture is hidden from the perspective of the user. It is therefore possible to provide a first storage means by a first hardware resource and a second storage means by a second hardware resource.

According to a further aspect of the present invention, the hardware resource functionality provision is performed either over an internet protocol address of the infrastructure entity or the internet protocol address of the updated further infrastructure entity. This provides the advantage that once the services are migrated from one hardware infrastructure to another, only the internet address of the respective service is adapted and the same service is provided in an updated version under a further internet address. The internet protocol address may also be provided in terms of a range of IP-addresses. Hence, the infrastructure entity provides the service under a first range of IP-addresses and the updated further infrastructure entity provides the service under a second range of IP-addresses.

According to a further aspect of the present invention, the second set of control commands forms a firmware. This provides the advantage that the second set of control commands is implemented machine-oriented and can be provided by the respective hardware vendor. Hence, also firmware updates can be accomplished without changing the first set of control commands. It is furthermore possible to provide the control commands by means of respective hardware implementations.

According to a further aspect of the present invention, the hardware resources are distributed over a network. This provides the advantage that the hardware resources may be operated by different operators and can be combined towards single services. Hence, the client entity can be provided with virtualized hardware resource functionality which can be operated across networks at different locations.

According to a further aspect of the present invention, the system is formed by a computer cluster. This provides the advantage that a scalable infrastructure provides the underlying server infrastructure services.

According to a further aspect of the present invention, the provided hardware resource functionality is stateless and the replication and replacement of control commands is performed at runtime. This provides the advantage that the system has not to be shut down, no offline time results and the server infrastructure services can be provided without a break. It may also be the case that the hardware resource functionality has a state which can be stored. Afterwards, the system can be shut down and the provisioning of the service can be switched. The updated further infrastructure entity, which now provides the service, has to read out the state being stored and provide the service under consideration of the stored state.

The object is also solved by a method for facilitating migration of server infrastructure services. The method comprises providing a client entity with hardware resource functionality by means of a first set of control commands, wherein each control command of the first set is implemented by at least one control command of a second set of control commands for accessing the hardware resources. The method furthermore comprises creating an updated further infrastructure entity by replicating the control commands of the first set of control commands and replacing at least a part of the respective control commands of the second set of control commands with stored control commands.

The object is also solved by a computer-readable medium containing program instructions for causing a computer to perform as set forth above.

Hence, a system and a method are suggested which allow an efficient migration of cloud infrastructure services between different heterogeneous platforms. The suggested approach can be applied to legacy systems and may be implemented using already existing technology.

In the following, the invention will be described merely by way of illustration with reference to the accompanying Figures which show:
- Fig. 1: a system for facilitating migration of cloud infrastructure services according to an aspect of the present invention;
- Fig. 2: a method for facilitating migration of cloud infrastructure services according to an aspect of the present invention;
- Fig. 3: an approach for aligning cloud infrastructure services according to an aspect of the present invention; and
- Fig. 4: a metamodel for expressing and capturing infrastructure as service concepts according to an aspect of the present invention.

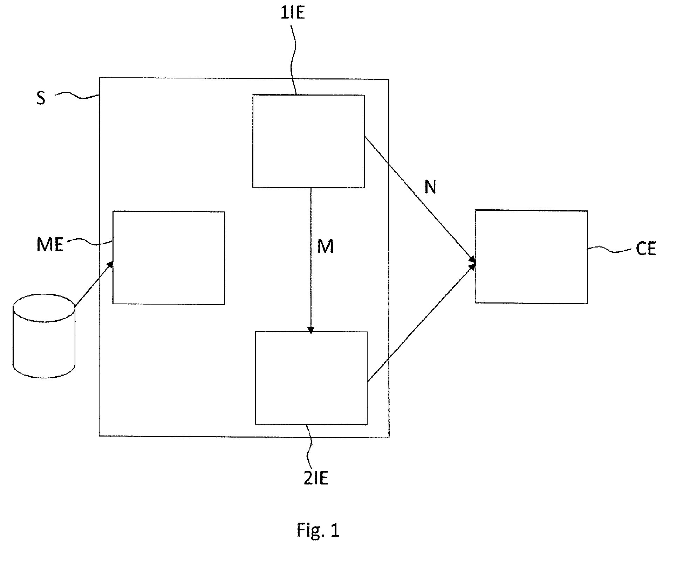

Figure 1 shows a system S for facilitating migration of server infrastructure services. Hence, a service being provided by a first infrastructure entity 1HE is migrated to a second infrastructure entity 2IE which is indicated in the present Figure 1 by the arrow M. The systems may be formed by several computers, such as a first computer 1IE as well as a second computer 2IE. The migration entity ME can as well be formed by a respective computer system or by a software component. As indicated in present Figure 1, a storage can be connectively coupled to the migration entity ME which provides updates of respective control commands. It may furthermore be the case that the storage device provides a metric which defines which control commands need to be updated and which control commands can be replicated and used as already accomplished.

As indicated by the rightmost arrows, a server infrastructure service can be provided over a network N to a client entity CE. This can be performed by the first infrastructure entity 1IE or the second infrastructure entity 2IE, namely the updated further infrastructure entity. It may also be the case that as an intermediate step, services are provided by the infrastructure entity 1IE and further services are provided by the second infrastructure entity 2IE. In a typical scenario, services are first provided by the first infrastructure entity, which are then migrated to the second infrastructure entity.

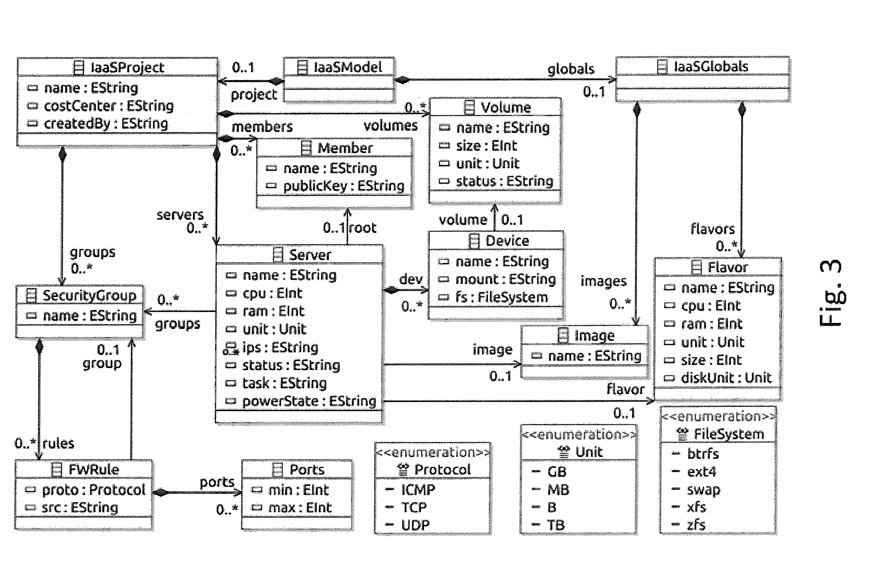

The migration entity ME is arranged to compute a difference between the provided services by both infrastructure entities and create a model indicating the identified differences. Afterwards, the model being performed by the first infrastructure entity 1IE is then adapted according to this difference model towards the second infrastructure entity 2IE. This can be performed by modeling the services being provided by the first infrastructure entity, creating a difference model, applying the changes being modeled by the difference model towards a target model to which the second infrastructure entity should correspond. Hence, the first infrastructure entity 1IE can be called a de facto model on which the DIFF-model is applied towards the de jure model. The respective de jure model can then be referred to as the second infrastructure entity 2IE. This is described in more detail by Figure 3.

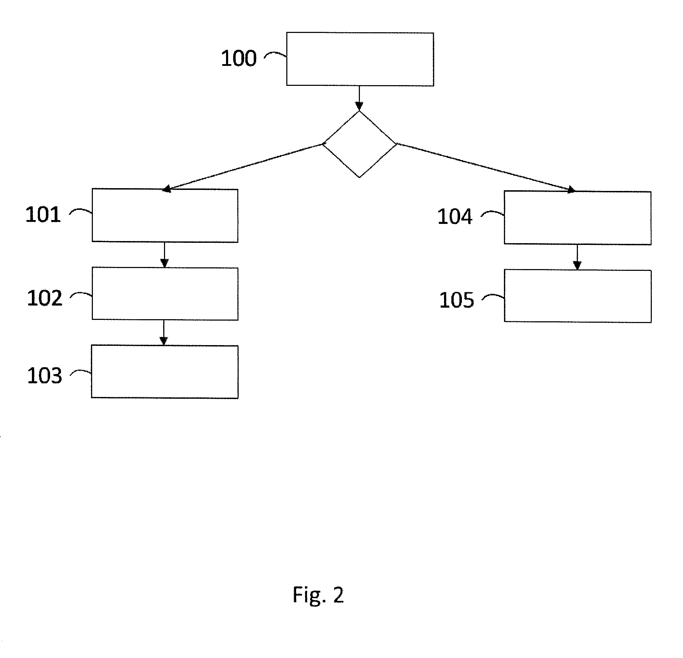

Figure 2 shows a method for facilitating a migration of a server infrastructure service. In a method step 100, the suggested method identifies a control command of the second set of control commands and checks whether the control command is up to date. This may comprise further sub-steps such as reading out a metric which indicates criteria as to when a control command needs to be updated. In case the identified control command is not up to date, a storage device is addressed in step 101. In case the control command is not up to date, a newer version of this control command is stored in a respective storage device and provided for a replacement procedure. Afterwards in step 102, the older version of the control command is replaced by the newer control command as identified in step 101. After doing so, the service is provided in step 103 under usage of the latest version of the control commands.

In case the identified control command is up to date, it can be replicated in step 104 and the service can be provided 105 by means of the former control command which is now replicated towards the second infrastructure entity.

This procedure is performed iteratively such that for every service being provided by a infrastructure entity, the method step 100 checks whether the provided functionality is up to date or not. The function terminates in case all provided services are transferred to the updated further infrastructure entity either in the old version, which is still up to date, or in case a newer version exists, by means of the updated control commands.

In cloud computing, modeling can be used to specify service topologies and entire cloud stacks. Following a model-driven approach provisioning can be automated, furthermore, using model transformation and code generation. Due to the realized automation, this significantly reduces time and costs of provisioning. Yet, a forward engineering approach is limited to initial setups. That is, changes introduced posterior to a generation are not addressed per se when a complete regeneration is to be avoided. For dealing with differential changes of infrastructure service models, a model-based round-trip engineering approach is proposed that combines the power of model-driven generation with runtime reflection. For this, a de facto runtime model is reverse-engineered using services of a cloud infrastructure provider and model differences are calculated and operated on for enforcing a de jure model. A particular implication of this contribution, combining design and runtime models, is the possibility to facilitate migration of cloud infrastructure services, e.g., when upgrading an infrastructure as a service (IaaS) solution

In the following, aspects of usage from a Model-Driven Forward Engineering to a Model-Based Round-Trip Engineering Approach are described.

For the provisioning of cloud infrastructure services, a model-driven approach can be followed using domain-specific languages (DSLs). For this, a metamodel is defined capturing IaaS concepts and a code generator produces an IaaS consumer for a conforming model. The consumer, finally, makes use of the IaaS provider's service interfaces for the provisioning. As such an approach is limited to forward engineering as outlined in the introduction, the model-based round-trip engineering approach is presented as a superior alternative that does not only incorporate models from design time but also models@run.time through runtime reflection.

In the following, aspects of usage of a Model-Based Approach using Runtime Reflection are described.

In both approaches the same metamodel is used for expressing and for capturing concepts from IaaS provisioning (see Figure 3). In contrast to the model-driven approach, the model-based approach does not directly operate on a model conforming to this metamodel. Instead, a model comprising model differences (referred to in this approach as a diff-model) is processed by the execution engine.

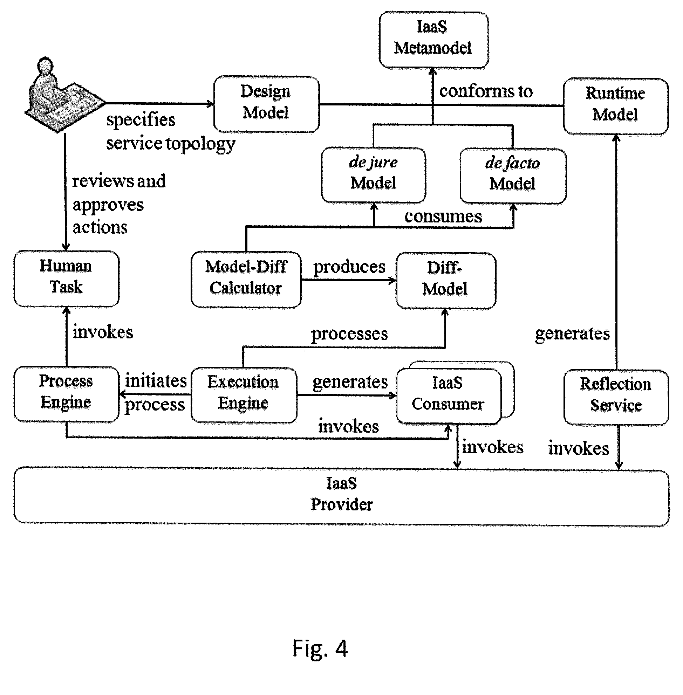

Figure 4 gives an overview of the round-trip engineering approach. Initially, an architect specifies a cloud infrastructure service topology in terms of a de jure model. It is compared with another model originating from the runtime. For generating such a de facto model, a reflection service interacts with the interfaces of the IaaS provider. The resulting diff-model is processed by the execution engine. It generates a business process and appropriate IaaS consumers. Differences that are merely additions (i.e., extensions to the existing service topology) can be applied directly. For this, respective service calls are performed against the IaaS provider. In case differences are discovered that shall be subject to a manual review however - e.g., when provisioned services are to be terminated - the business process involves a human task. This way, an architect can review the changes and approve resulting measures.

The technical realization can be performed as follows:
As a modeling framework, the Eclipse Modeling Framework (EMF) was chosen. The metamodel was built using Eclipse Xtext (Xtext) by defining a textual grammar. Diff-models are calculated using EMF Compare. For model transformation, realizing the execution engine, Eclipse Xtend (Xtend) was used. Exposing IaaS APIs such as OpenStack Compute (Nova) and OpenStack Identity Service (Keystone), OpenStack served as an IaaS solution.

Figure 3 depicts a metamodel comprising EC2 concepts. An IaaS project represents a tenant comprising cloud infrastructure services such as server instances, volumes, and security groups. Firewall rules (FWRules) translate to EC2 security rules and specify permitted protocols and/or open ports.

Models conforming to this metamodel were directly transformed to IaaS consumers in the model-driven approach. While they originated from the design time, the novel model-based approach also considers models derived from the runtime. Thus, the metamodel both serves for expressing and for capturing IaaS concepts. For this, the metamodel was enriched with a few runtime concepts such as assigned Internet Protocol (IP) addresses or different states. As a result, the Server and Volume classes have been extended with additional attributes (e.g., ips, status, and powerState). In the context of this work, the single purpose of the metamodel remains focused on driving the provisioning.

Aspects of Reverse-Engineering a Runtime Model are described in the following. The reflection service was realized as a representational state transfer (REST) service. Associated with an IaaS provider when deployed, it consumes a tenant identifier and returns a de facto model reflecting the current provisioned cloud infrastructure services. As mentioned, such a model conforms to the same metamodel as used for design time.

The service invokes the IaaS provider's application programming interfaces (APIs) for performing the runtime reflection. Programmatically, first, a token is retrieved after an initial authentication that is used in subsequent requests. Next, a list of security groups is requested. For each of the security groups, the security rules are then requested. Next, a list of server instances is retrieved. Iterating all the instances, the various associated properties are looked up such as the image, the flavor, the assigned security groups, the security key, and associated IP addresses. Finally, volumes and associated instances are looked up before the token is invalidated.

Meanwhile, the model is populated with the obtained information. Finally, the de facto model is returned to the caller.

Model-Based Enforcement is described in the following. From two models (e.g., one model specified by an architect and one model generated by the reflection) a diff-model is calculated. Describing the discrepancy between a de jure and a de facto model, the diff-model is further processed for resolving the changes. That is, IaaS consumers are generated that, when invoked, interact with the target IaaS provider for aligning the cloud infrastructure.

For calculating a diff-model a two-way comparison is performed using EMF Compare with the matching strategy being based on the object content. Differences are grouped by their kind such as additions, deletions, or changes. Former differences that merely depict extensions to the service topology can be resolved by provisioning the additional cloud services. Other differences may require review and approval prior to application. For this reason, different IaaS consumers are generated containing the respective service calls. The consumer comprising the non-critical alignments is invoked directly by the generated and initialized business process (cf. Business Process Execution Language (BPEL)). In case of critical alignments that result in the termination of infrastructure services a manual review needs to be undertaken. For this the generated business process contains approval tasks relating to the critical differences. When approved the respective IaaS consumer is invoked by the business process.

Application Scenarios are described in the following. In the following, the applicability of the approach is further illustrated by discussing different types of scenarios. That is, for all of the scenarios the same model-based approach is applied as previously presented using a de jure and a de facto model for determining respective provisioning actions.

Initial Provisioning of Infrastructure Services can be performed as follows. Given a model describing a cloud infrastructure service topology, the question arises how these services can be provisioned in an automatized manner.

The first type of usage scenario equals simply to what has been already covered by the functionality of the model-driven approach. That is, from a service topology, infrastructure services are to be provisioned in a greenfield scenario.

As no cloud infrastructure services are existing in the respective tenant, the reflection service yields an empty de facto model. This is compared against the user supplied de jure model comprising the infrastructure services to be provisioned. As a consequence, the diff-model comprises additions only. Each addition is transformed by the execution engine into code that realizes the provisioning of the respective service. Thus, in contrast to the model-driven approach the execution engine of the model-based approach processes a diff-model. In both approaches, a complete IaaS consumer for provisioning all of the services is generated using model-to-text transformation: By comparing a model against an empty model, the model-based approach yields the same actions as the model-driven approach that processes the model. In fact, an IaaS consumer that results from transforming the diff-model instantiates all the infrastructure services as present in the model. As a consequence, the IaaS consumers generated by the different approaches are equal in terms of their behavior.

This way, the model-based approach covers the functionality of the model-driven approach and as required by this usage scenario. In the following some further application scenarios are described proving the model-based approach to be a superior alternative to the formerly presented model-driven approach.

Design Time Modification and Runtime Adaptation can be described as follows. Given previously deployed cloud infrastructure services in a tenant, the question arises how changes to an original model can be propagated and be enforced for adopting the respective tenant.

In this scenario an initial provisioning as previously described has taken place. The original model was modified then. Instead of rebuilding the entire service topology from scratch, changes are identified first and applied to the existing IaaS provider. While in this scenario it would be possible to compare two models from design time, i.e., a revised version with an original describing the current topology in terms of infrastructure services the latter model is reverse-engineered using reflection services. A reason for this is that the resulting model effectively constitutes a de facto model for the given point in time. If the former version of a model is to be used as the basis for comparison it would require that it reflects reality and that no changes must be undertaken apart from the model. Relying on the reflection service, this restriction is not necessary. Indeed, services can manually be provisioned without the risk to jeopardize the model-based approach.

Thus, in this scenario the de jure model is a revised version of a model and the de facto model is obtained using the reflection service. As in the previous scenario, the differences may only comprise additions. In this case they are applied directly. However it is also possible that differences are of other types. In such cases a manual review is scheduled.

Alignment of Cloud Infrastructure Services can be described as follows. Given two different cloud tenants, the question may arise how the cloud infrastructure services can be aligned between them so that one tenant comprises the same infrastructure services as the other?

With the approach it is equally possible to compare two runtime models, e.g., for aligning provisioned cloud infrastructure services of two tenants in different clouds. For this the respective reflection services yield corresponding models. According to what model is elected as the de jure model the tenant of the other model is aligned subsequently.

This scenario is similar to the previously described scenario in a sense that the diff-model may contain any kind of difference (i.e., not only additions as in the initial provisioning) and that the model transformation is alike. In fact, the only distinction is the selection of two runtime models.

When comparing two tenants using the reflection service with the target being empty, all cloud infrastructure services from the source tenant will be provisioned at the target tenant. This is exploited for facilitating the migration of infrastructure services as described next.

Facilitating Migration of Infrastructure Services can be performed as follows. One strategy for upgrading an IaaS deployment, aiming at minimizing downtime, is to involve two deployments for the time of migration: one that constitutes the current used cloud (comprising all the tenants) and a new one running the target version of the IaaS solution.

Given two IaaS deployments, the question arises how the infrastructure services from one cloud can be migrated to the other.

By realizing the alignment of cloud infrastructure services as previously described, such migration can be facilitated. First, all tenants need to be created at the new deployment. Next, all the tenants need to be migrated. For this, two runtime models are compared; one originating from the source cloud comprising the provisioned services to be migrated and one empty model from the target. Next, the execution engine aligns the target with the source for facilitating the migration of the cloud services. Finally, the original cloud services are terminated once the migration has been affirmed.

After the alignment of the infrastructure services has taken place, the business process schedules a task for manually completing and verifying the migration. When the migration is affirmed to have succeeded the IaaS consumer is invoked for terminating the original cloud services completing the migration.

The migration of cloud infrastructure services between IaaS solutions can be facilitated using a model-based approach which combines generation techniques with runtime reflection. As a special case, the upgrade of an IaaS deployment such as desirable when migrating to a new OpenStack release can be facilitated for tenants for migrating infrastructure services.

The person skilled in the art appreciates that the scope of the invention is not restricted to the concepts as mentioned before, but this merely represents aspects of the present invention. In general, the suggested method can be accomplished with any legacy cloud server, wherein the concepts as mentioned before are only exemplary implementations. In contrast to a naive model-driven, and forward-only approach, the presented model based approach enables alignment of existing cloud infrastructure services. Incorporating runtime reflection for reverse-engineering a runtime model of infrastructure services the approach paves the way for facilitating their migration.

The generated de facto model of infrastructure services reflecting the runtime is not only useful for the (partial) provisioning (e.g., in an incremental/iterative practice) but potentially also valuable to stakeholders for representation purposes (cf. model-based reporting MbR). Also it is possible to validate a design time model against the runtime by calculating mismatches. Such results can be feed into monitoring for alerting. For practical adoption, the presented work needs to be accompanied by test cases ensuring the correctness of migration. As mentioned, the work only can serve as a first step towards the migration of cloud services and cloud applications. For completely migrating cloud infrastructure further work has to be carried out. For example, there are remaining challenges such as how to migrate (assigned) floating IP addresses.

Regarding the Model Transformation the calculated diff-model is processed by the execution engine. In the following it is explained how changes can be translated into IaaS consumer calls according to an aspect of the present invention. Depending on the kind of change, the concerned model element, its type, and content respective API calls can be generated. Note that the IaaS metamodel may be closely related to IaaS APIs. For this reason transformation rules from model-elements to respective actions can easily be expressed programmatically. In case of the forward engineering approach this can be realized in form of Xtend extension methods. Similarly, also in the round-trip engineering approach Xtend extension methods are defined for the different types of model-elements that also take the kind of change as parameter into account. This way, it is similarly possible according to an aspect of the present invention to generate respective actions although a diff-model is processed.

In case the diff-model contains an addition of a Server instance, a REST consumer is generated that when executed calls the POST operation {tenant id}/servers according to an aspect of the present invention. While the Uniform Resource Locator (URL) path contains a path parameter for the tenant identifier other data has to be passed in the body using the JavaScript Object Notation (JSON) such as a reference to the desired image or the to be associated security groups. The de jure model may contain related information and is thus consulted by the execution engine within the transformation rule.

Although the levels of abstraction between different elements of the metamodel and APIs operations are often alike, this is not always the case. Therefore some changes do not result in a direct mapping. That is, sometimes multiple actions have to be generated for a change. For instance, a user may have to be created prior to assigning her to a tenant. Also, for assigning a floating IP it may first be necessary to allocate a floating IP from a pool that in a second step can be assigned to a server instance. This technical detail is abstracted from in the metamodel and therefore has to be incorporated during code generation according to an aspect of the present invention.

Another cause that may complicate an implementation of a model transformation is the design of the target language, i.e., the OpenStack (OpenStack) APIs in this work. While most REST operations are similar between the different kind of changes, there are exceptions to a naming convention. For instance, not all operations that are related to deletions use the Hypertext Transfer Protocol (HTTP) option DELETE : For releasing a floating IP a POST request has to be issued and the keyword unreserve has to be passed in the body.

The processing order may be crucial according to an aspect of the present invention. This is because references may have changed that introduce dependencies and require that referenced elements are dealt with first. For example, if a change consists of an existing server instance referencing a new volume group, the volume group has to be created first and can then be attached to the server instance. Thus, references need to be followed and the algorithm needs to mark visited elements according to an aspect of the present invention.

Not all differences of a diff-model need to be considered as one action may cover multiple of such differences. For example, if a new security group is to be created the diff-model would not only comprise the addition of a new security group but also a change in the IaaSProject.groups reference list.

Finally, changes that do not categorize as additions or deletions may be transcribed or may need to be handled accordingly. Sometimes there is no difference in state if a change such as an update or a move is realized using a deletion and addition in which case these operations of the API can be resorted. If this is not the case the respective API needs to support these changes by providing additional operations to the minimum set. The generated actions (i.e., API calls) are aggregated in two IaaS consumers according to an aspect of the present invention: non-critical alignments, i.e., actions resulting from additions are placed in the first consumer. Actions originating from other differences that require review are stored in a different consumer according to an aspect of the present invention.

The person skilled in the art appreciates that the aforementioned concepts are presented merely for illustrating the underlying idea of the suggested subject-matter. The implementations can as well rely on further legacy concepts and can be implemented without reference to the mentioned implementations. The described concepts are typically not bound to a specific hardware environment but are able to consider the underlying hardware constraints.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A system (S) for facilitating migration of server infrastructure services, comprising:
an infrastructure entity (1IE) being arranged to provide a client entity (CE) with hardware resource functionality by means of a first set of control commands, wherein each control command of the first set is implemented by at least one control command of a second set of control commands for accessing the hardware resources; and
a migration entity (ME) being arranged to create an updated further infrastructure entity (2IE) by replication of the control commands of the first set of control commands and replacement of at least a part of the respective control commands of the second set of control commands with stored control commands.

2. The system (S) according to claim 1, wherein the infrastructure entity (1IE) and the further infrastructure entity (2IE) are formed by virtualized hardware resources.

3. The system (S) according to claim 1 or 2, wherein the migration entity (ME) is arranged to iteratively identify control commands of the first set and replicate the identified control commands as part of the updated further infrastructure entity (2IE).

4. The system (S) according to any one of the preceding claims, wherein the migration entity (ME) is arranged to switch the provision of the hardware resource functionality from the infrastructure entity (IE) to the updated further infrastructure entity (2IE).

5. The system (S) according to any one of the preceding claims, wherein the migration entity (ME) is arranged to replace control commands of the second set in case an updated control command is stored.

6. The system (S) according to any one of the preceding claims, wherein at least one of a group of hardware resource functionalities is provided, the group comprising: processor usage, memory usage, storage usage and network usage.

7. The system (S) according to any one of the preceding claims, wherein the stored control commands provide updates of the control commands of the second set of control commands.

8. The system (S) according to any one of the preceding claims, wherein the provision of the hardware resource functionality is performed over a network.

9. The system (S) according to any one of the preceding claims, wherein the hardware resource functionality provision is performed either over an internet protocol address of the infrastructure entity (1IE) or the internet protocol address of the updated further infrastructure entity (2IE).

10. The system (S) according to any one of the preceding claims, wherein the second set of control commands forms a firmware.

11. The system (S) according to any preceding claim, wherein the hardware resources are distributed over a network.

12. The system (S) according to any one of the preceding claims, being formed by a computer cluster.

13. The system (S) according to any one of the preceding claims, wherein the provided hardware resource functionality is stateless and the replication and replacement of control commands is performed at runtime.

14. A method for facilitating migration of server infrastructure services, comprising:
providing a client entity (CE) with hardware resource functionality by means of a first set of control commands of an infrastructure entity (1IE), wherein each control command of the first set is implemented by at least one control command of a second set of control commands for accessing the hardware resources; and
creating an updated further infrastructure entity (2IE) by replicating the control commands of the first set of control commands and replacing at least a part of the respective control commands of the second set of control commands with stored control commands.

15. A computer-readable medium containing program instructions for causing a computer to perform the method of claim 14.
